# EUROPÄISCHE PATENTSCHRIFT

(11) **EP 3 271 908 B1**
(45) Veröffentlichungstag und Bekanntmachung des Hinweises auf die Patenterteilung: **20.07.2022**
(21) Anmeldenummer: 16701935.5
(22) Anmeldetag: 28.01.2016
(51) Int. Cl.: G08G 1/14, G05D 1/02, G08G 1/04, H04W 4/024

(54) **KONFIGURATION EINES VERWALTUNGSSYSTEMS FÜR EINEN PARKPLATZ**
CONFIGURATION OF AN ADMINISTRATIVE SYSTEM FOR A PARKING SPACE
CONFIGURATION D'UN SYSTÈME DE GESTION D'UN PARC DE STATIONNEMENT

(30) Priorität: 18.03.2015 DE 102015204854
(43) Veröffentlichungstag der Anmeldung: 24.01.2018
(73) Patentinhaber: Robert Bosch GmbH, 70442 Stuttgart (DE)
(72) Erfinder: NICODEMUS, Rolf, 74321 Bietigheim-Bissingen (DE); NORDBRUCH, Stefan, 70806 Kornwestheim (DE)
(86) Internationale Anmeldenummer: PCT/EP2016/051788
(87) Internationale Veröffentlichungsnummer: WO 2016/146288

(56) Entgegenhaltungen:
- DE-A1-102012 016 800
- US-A1- 2013 057 686
- US-A1- 2014 022 095

## Beschreibung

Die Erfindung betrifft ein Verwaltungssystem für einen Parkplatz. Insbesondere betrifft die Erfindung die Konfiguration eines solchen Systems.

### Stand der Technik

Ein Verwaltungssystem für einen Parkplatz ist dazu eingerichtet, einen oder mehrere Abstellplätze für Kraftfahrzeuge auf dem Parkplatz zu verwalten. Insbesondere um eine Reservierung oder eine Abrechnung der Reservierung oder Benutzung einer Abstellfläche zu ermöglichen, ist im Bereich jeder Abstellfläche ein Fahrzeugsensor zur Erfassung eines Kraftfahrzeugs angebracht. Eine Verarbeitungseinrichtung des Verwaltungssystems erhält von dem Fahrzeugsensor die Information, ob die betreffende Abstellfläche durch ein Kraftfahrzeug belegt ist oder nicht. Aus den Signalen vieler solcher Fahrzeugsensoren kann dann beispielsweise bestimmt werden, ob der Parkplatz bereits voll belegt ist. Eine Einfahrt weiterer Kraftfahrzeuge kann dann verhindert werden.

Es sind unterschiedliche Fahrzeugsensoren bekannt, die beispielsweise oberhalb oder unterhalb der Abstellfläche angebracht werden können. Die Sensoren können beispielsweise mittels Ultraschall, optisch oder kapazitiv arbeiten. Um die Fahrzeugsensoren zu konfigurieren, beispielsweise bei einer Installation oder Inbetriebnahme des Verwaltungssystems, ist es üblicherweise erforderlich, beabsichtigte Positionen der Fahrzeugsensoren zu bestimmen und die Fahrzeugsensoren dann an den korrekten Positionen anzubringen. Das Anbringen kann aufwendig sein, beispielsweise wenn ein Fahrzeugsensor verwendet wird, der in den Boden der Abstellfläche eingelassen wird. Das Vermessen und das Anbringen der Fahrzeugsensoren sind üblicherweise manuelle Vorgänge, die mit hohen Kosten und einer gewissen Fehlerwahrscheinlichkeit behaftet sein können.

In US 2014/0022095 wird vorgeschlagen, einen Fahrzeugsensor mittels eines tragbaren Sensors aufzufinden. In einer Weiterbildung können der Sensor und optional sein Bediener auf einem Wagen fahrbar angeordnet sein.

Es ist Aufgabe der vorliegenden Erfindung, die Konfiguration eines Verwaltungssystems für einen Parkplatz zu vereinfachen. Die Erfindung löst diese Aufgabe mittels der Gegenstände der unabhängigen Ansprüche. Unteransprüche geben bevorzugte Ausführungsformen wieder.

### Offenbarung der Erfindung

Anspruch 1 beansprucht ein System zur Konfiguration eines Verwaltungssystems für einen Parkplatz.

Durch Verwendung des Systems ist es möglich, den Fahrzeugsensor zu konfigurieren und erst später mittels der fahrbaren Plattform zu vermessen. Dabei kann das Bestimmen der Position des Fahrzeugsensors automatisiert werden. Eine manuelle Vermessung der Position des Fahrzeugsensors kann dadurch entfallen, wodurch Kosten eingespart werden können. Außerdem können Fehlerquellen bei der manuellen Vermessung eliminiert werden. Mittels des beschriebenen Systems ist es außerdem möglich, eine Zuordnung eines angebrachten Fahrzeugsensors zu einer Abstellfläche für ein Kraftfahrzeug automatisiert durchzuführen. Das Verwaltungssystem kann dadurch unmittelbar in die Lage versetzt werden, den Belegt-Zustand einer Abstellfläche mittels des Sensors korrekt auszuwerten.

In einer nicht beanspruchten Variante umfasst die Einrichtung einen an der Plattform angebrachten Sensor zur Erfassung des Fahrzeugsensors. Der Sensor kann den Fahrzeugsensor beispielsweise optisch erfassen. Handelt es sich um einen aktiven Fahrzeugsensor, der ein physisches Signal aussendet, so kann der Sensor auch dieses Signal auswerten. Funktioniert der Fahrzeugsensor beispielsweise mittels Ultraschall, so kann der Sensor an der Plattform das Ultraschallsignal auswerten. Anschließend kann die Plattform Informationen über das erkannte

Kraftfahrzeug weiterleiten, insbesondere an das Verwaltungssystem, und bevorzugterweise drahtlos.

In der beanspruchten Variante ist die Plattform dazu eingerichtet, durch den Fahrzeugsensor als Kraftfahrzeug erfasst zu werden, wobei die Einrichtung den Fahrzeugsensor umfasst. Dadurch kann Gebrauch gemacht werden von dem Verwaltungssystem und dem bereits angebrachten Fahrzeugsensor. Das Auffinden des Fahrzeugsensors kann dadurch erleichtert werden.

Die Navigationseinrichtung der fahrbaren Plattform kann auf unterschiedliche Weisen ausgeführt sein. In einer ersten Ausführungsform umfasst die Navigationseinrichtung einen Empfänger für Signale von Navigationssatelliten. Insbesondere bei einem Parkplatz unter freiem Himmel kann dadurch eine schnelle, genaue und kostengünstige Positionsbestimmung der Plattform durchgeführt werden. In einer zweiten Ausführungsform umfasst die Navigationseinrichtung ein Trägheitsnavigationssystem. Dadurch kann die Position der Plattform unabhängig von einer umgebenden Infrastruktur bestimmt werden. In einer dritten Ausführungsform umfasst die Navigationseinrichtung einen Empfänger für Signale von drahtlosen Sendern, die im Bereich des Parkplatzes angebracht sind, wobei die Steuereinrichtung dazu eingerichtet ist, die Position der Plattform auf der Basis von Positionen der drahtlosen Sender mittels Triangulation zu bestimmen. Die drahtlosen Sender können insbesondere WLAN-Stützpunkte sein, die im Bereich des Parkplatzes zur Kommunikation verbaut sind. Insbesondere dann, wenn der Fahrzeugsensor mittels WLAN mit einer zentralen Einheit kommuniziert, kann in dieser Ausführungsform vorteilhaft von der bereits angebrachten Infrastruktur des Verwaltungssystems Gebrauch gemacht werden. Es sind auch noch andere Möglichkeiten zur Navigation bzw. Positionsbestimmung der fahrbaren Plattform möglich, wobei beliebig viele Ausführungsformen miteinander kombiniert werden können, um die Position der Plattform zu bestimmen.

In noch einer weiteren Ausführungsform sind mehrere Fahrzeugsensoren in zufälligen Positionen auf dem Parkplatz angeordnet, wobei eine mittlere Dichte von Fahrzeugsensoren pro Fläche eingehalten ist. Die Fahrzeugsensoren können beispielsweise nach dem Zufallsprinzip auf der Fläche des Parkplatzes verteilt angebracht sein. Dabei ist bevorzugterweise auf eine ausreichende Gleichverteilung der Fahrzeugsensoren zu achten, um möglichst keinen Abschnitt des Parkplatzes, der wenigstens so groß ist wie ein Kraftfahrzeug, ohne Fahrzeugsensoren auszustatten.

Anspruch 6 beansprucht ein Verfahren zur Konfiguration eines Verwaltungssystems für einen Parkplatz.

Das Verfahren kann insbesondere unter Verwendung der oben beschriebenen fahrbaren Plattform durchgeführt werden. Insbesondere dann, wenn die Plattform dazu eingerichtet ist, den Parkplatz autonom abzufahren, kann das Verfahren praktisch unbeaufsichtigt ablaufen. Die Konfiguration des Verwaltungssystems kann dadurch rasch und genau erfolgen.

In einer nicht beanspruchten Variante wird die Annäherung der Plattform an den Fahrzeugsensor seitens der Plattform bestimmt. In der beanspruchten Variante wird die Annäherung seitens des Fahrzeugsensors bestimmt.

Ein Computerprogrammprodukt umfasst Programmcodemittel zur Durchführung des beschriebenen Verfahrens, wenn das Computerprogrammprodukt auf einer Verarbeitungseinrichtung abläuft oder auf einem computerlesbaren Datenträger gespeichert ist.

### Kurze Beschreibung der Figuren

Die Erfindung wird nun mit Bezug auf die beigefügten Figuren genauer beschrieben, in denen:
- Fig. 1: ein Verwaltungssystem für einen Parkplatz und ein System zu dessen Konfiguration;
- Fign. 2 und 3: Variationen von Verfahren zur Konfiguration des Verwaltungssystems von Fig. 1; und
- Fig. 4: unterschiedliche Ausführungsformen von Fahrzeugsensoren, jeweils zur Erfassung eines Kraftfahrzeugs auf dem Parkplatz von Fig. 1
darstellt.

### Genaue Beschreibung von Ausführungsformen

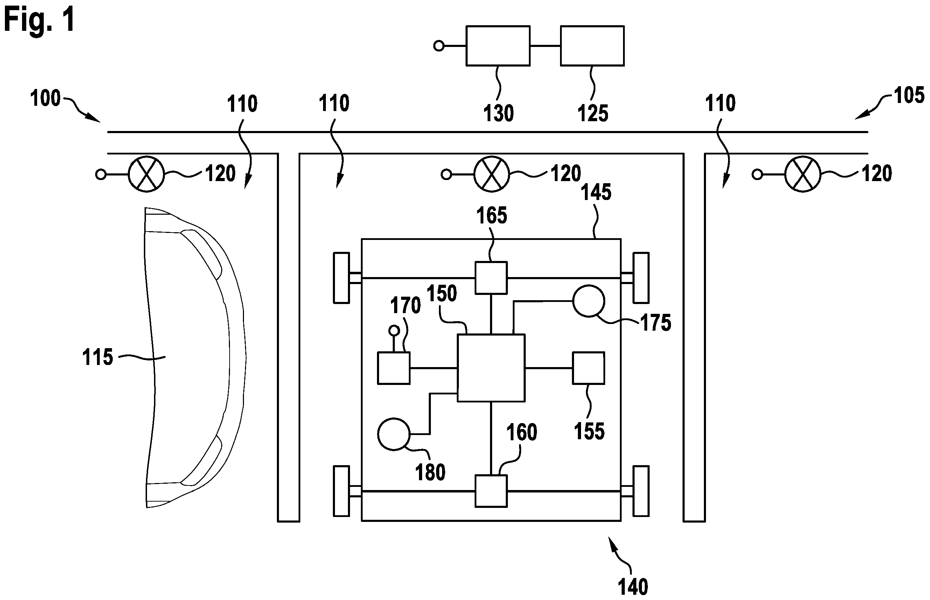

Figur 1 zeigt ein Verwaltungssystem 100 zur Verwaltung eines Parkplatzes 105 mit mehreren Abstellflächen 110 für Kraftfahrzeuge 115. Auf dem Parkplatz 105, ist wenigstens ein Fahrzeugsensor 120 angebracht, der dazu eingerichtet ist, die Anwesenheit eines Kraftfahrzeugs 115 zu bestimmen und ein entsprechendes Signal bereitzustellen. Dabei kann der Fahrzeugsensor 120 insbesondere im Bereich einer Abstellfläche 110 oder im Bereich eines Verkehrswegs des Parkplatzes 105 angeordnet sein. Das Signal wird an eine Verwaltungseinheit 125 übermittelt, wobei in der dargestellten Ausführungsform die Übermittlung drahtlos über einen Stützpunkt 130 erfolgt. Eine drahtgebundene Übermittlung ist jedoch ebenfalls möglich. Der Stützpunkt 130 ist bevorzugterweise dazu eingerichtet, mit mehreren Fahrzeugsensoren 120 drahtlos zu kommunizieren. Dabei kann insbesondere WLAN-Technologie eingesetzt werden. Die Verwaltungseinheit 125 ist üblicherweise dazu eingerichtet, eine Reservierung und/oder Abrechnung einer Miete für das Belegen einer Stellfläche 110 durch ein Kraftfahrzeug 115 durchzuführen. Außerdem können fortgeschrittene Funktionen wie eine Verkehrssteuerung oder ein Leitsystem für Kraftfahrzeuge 115 auf dem Parkplatz 105 implementiert sein.

Figur 1 zeigt außerdem ein System 140 zur Konfiguration des Verwaltungssystems 100. In einigen Ausführungsformen umfasst das System 140 Teile des beschriebenen Verwaltungssystems 100. Insbesondere umfasst das System 140 eine fahrbare Plattform 145 zum Abfahren des Parkplatzes 105. Die fahrbare Plattform 145 kann relativ klein nach Art eines autonomen Bodenstaubsaugers oder eines autonomen Rasenmähers aufgebaut sein, oder es kann ein automatisiert fahrbares Kraftfahrzeug 115 als Plattform 145 verwendet werden. Die Plattform 145 umfasst eine Steuereinrichtung 150, eine Navigationseinrichtung 155 sowie bevorzugterweise eine Antriebseinrichtung 160 und eine Lenkeinrichtung 165, die es der Steuereinrichtung 150 erlauben, die Plattform 145 auf dem Parkplatz 105 zu bewegen. Bevorzugterweise ist auch eine drahtlose Schnittstelle 170 vorgesehen, die, beispielsweise über den Stützpunkt 130, eine Kommunikation mit der Verwaltungseinheit 125 erlaubt. In einer nicht beanspruchten Ausführungsform ist ein Sensor 175 zur Erfassung des Fahrzeugsensors 120 vorgesehen. Der Sensor 175 kann beispielsweise optisch ausgeführt sein. Handelt es sich bei dem Fahrzeugsensor 120 um einen aktiven Sensor, der ein Signal aussendet und dessen Reflektion auswertet, um die Präsenz eines Kraftfahrzeugs 115 zu bestimmen, so kann der Sensor 175 das durch den Fahrzeugsensor 120 ausgesendete Signal auswerten. Das Signal kann beispielsweise ein Ultraschallsignal, ein Radarsignal, ein Lidarsignal oder ein elektromagnetisches Wechselfeld umfassen.

Es wird vorgeschlagen, dass die Plattform 145, gesteuert durch die Steuereinrichtung 150, vorzugsweise autonom den Parkplatz 105 abfährt, wobei eine Annäherung der Plattform 145 an einen der Fahrzeugsensoren 120 bestimmt wird. Liegt eine Annäherung vor, so wird die Position der Plattform 145 bestimmt und die Position des Fahrzeugsensors 120 wird der Position der Plattform 145 zugeordnet. In einer nicht beanspruchten Variante wird die Annäherung der Plattform 145 an den Fahrzeugsensor 120 mittels des Sensors 175 festgestellt. In diesem Fall kann die seitens der Plattform 145 bestimmte Position entweder unmittelbar, beispielsweise mittels drahtloser Übertragung, an das Verwaltungssystem 100 weiterleiten oder in einem internen Speicher ablegen, um eine Übertragung der bestimmten Position des Fahrzeugsensors 120 bzw. der bestimmten Positionen mehrerer Fahrzeugsensoren 120 an das Verwaltungssystem 100 zu einem späteren Zeitpunkt durchzuführen. Die Übertragung kann dann beispielsweise kabelgebunden erfolgen. Optional kann die Plattform 145 während des Übertragens eine interne Batterie aufladen. Für den Übertragungs- und/oder Aufladevorgang kann ein so genanntes Dock für die Plattform 145 vorgesehen sein.

In der beanspruchten Variante ist die Plattform 145 dazu eingerichtet, durch den Fahrzeugsensor 120 für ein Kraftfahrzeug 115 gehalten zu werden, wobei die Annäherung der Plattform 145 an den Fahrzeugsensor 120 seitens des Verwaltungssystems 100 bestimmt wird. Ist die Plattform 145 deutlich kleiner in Masse oder Ausmaßen als ein Kraftfahrzeug 115, so kann ein Signatursender 180 vorgesehen sein, um die Plattform 145 gegenüber dem Fahrzeugsensor 120 wie ein Kraftfahrzeug 115 erscheinen zu lassen. Der Signatursender 180 kann insbesondere bei einem aktiven Fahrzeugsensor 120 verwendet werden und beispielsweise einen elektromagnetischen Sender umfassen.

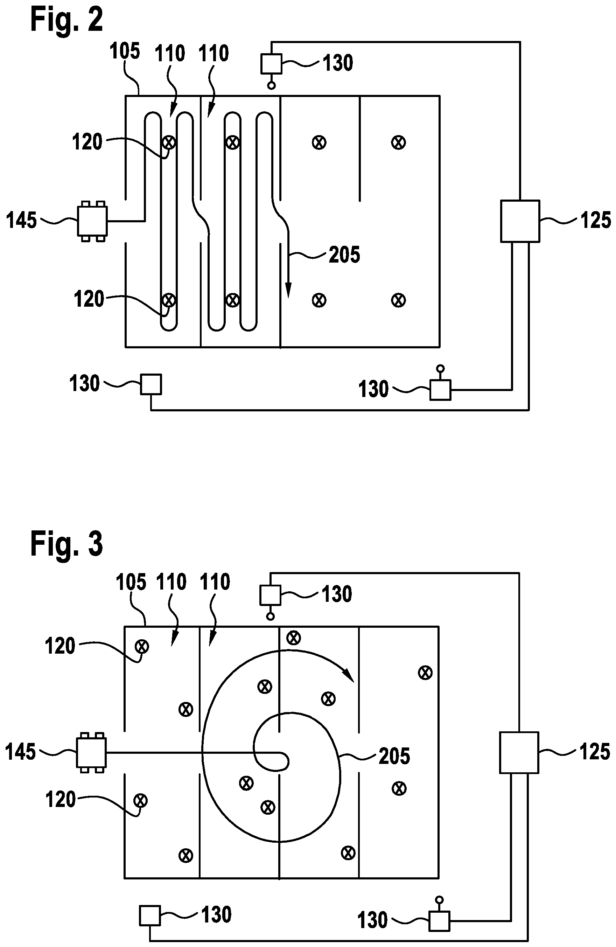

Figur 2 zeigt eine Illustration eines Verfahrens zur Konfiguration des Verwaltungssystems 100 von Figur 1. Es wird davon ausgegangen, dass sich auf dem Parkplatz 105 möglichst wenige Hindernisse befinden, insbesondere dass weitere Kraftfahrzeuge 115 entfernt sind. An jeder Stellfläche 110 des Parkplatzes 105 ist wenigstens ein Fahrzeugsensor 120 angebracht, dessen genaue Position unbekannt sein kann. Die Plattform 145 fährt den Parkplatz 105 ab, sodass sie sich möglichst an jeden angebrachten Fahrzeugsensor 120 so weit annähert, wie es ein gewöhnliches Kraftfahrzeug 115 tut, wenn es auf einer der Abstellflächen 110 abgestellt wird. In der dargestellten Ausführungsform folgt die Plattform 145 einem mäanderförmigen Kurs 205, der die möglichst vollständige Abdeckung des Parkplatzes 105 sicherstellt.

Wird eine Annäherung der Plattform 145 an einem der Fahrzeugsensoren 120 detektiert, seitens des Fahrzeugsensors 120, so wird die Position der Plattform 145 bestimmt. In einer Ausführungsform erfolgt die Positionsbestimmung über Radiosignale von mehreren Stützpunkten 130 des Verwaltungssystems 100, die an bekannten Positionen im Bereich des Parkplatzes 105 angebracht sind. Seitens der Plattform 145 erfolgt die Positionsbestimmung mittels der drahtlosen Schnittstelle 170 und einem Triangulationsverfahren.

Figur 3 zeigt eine Variante des in Figur 2 skizzierten Verfahrens. Hier wird versucht, den Parkplatz 105 vollständig abzufahren, indem die Plattform 145 von einer möglichst zentral gewählten Position aus einen spiralförmigen Kurs 305 fährt. In weiteren Varianten sind auch andere Kurse möglich, die beispielsweise Lernverfahren oder Backtracking umfassen können. Auch eine chaotische oder zufällige Wahl des Kurses ist möglich.

Es ist weiterhin möglich, Fahrzeugsensoren 120 nicht notwendigerweise vorbestimmten Bereichen des Parkplatzes 105 zugeordnet anzubringen, sondern lediglich dafür zu sorgen, dass eine ausreichende Dichte von Fahrzeugsensoren 120 auf der Fläche des Parkplatzes 105 vorliegt. Dadurch wird ebenfalls sichergestellt, dass auf jeder Abstellfläche 110 wenigstens ein Fahrzeugsensor 120 vorliegt. Die Zuordnung der einzelnen Fahrzeugsensoren 120 zu den Abstellflächen 110 erfolgt dann im Rahmen der Positionsbestimmung mittels der Plattform 145, wie oben beschrieben ist. Bei der dargestellten, statistischen Verteilung von Fahrzeugsensoren 120 auf dem Parkplatz 105 kann insbesondere eine Rekonfiguration des Parkplatzes 105, etwa hinsichtlich einer Abstellfläche 110 oder eines Verkehrswegs, leichter erfolgen, ohne Fahrzeugsensoren 120 zu versetzen.

Zur Anbringung der Fahrzeugsensoren 120 können diese in einen Bodenbelag des Parkplatzes 105 eingearbeitet werden, insbesondere wenn der Bodenbelag frisch aufgebracht und noch nicht abgebunden ist. Der Fahrzeugsensor 120 kann dann beispielsweise in die noch weiche Masse des aufgebrachten Bodenbelags eingedrückt werden. Fahrzeugsensoren 120 können auch mit dem Bodenbelag vermischt und mit ihm zusammen aufgebracht werden. Der Fahrzeugsensor ist dabei üblicherweise relativ klein, bevorzugt ist eine Höhe im Bereich von ca. 2 cm.

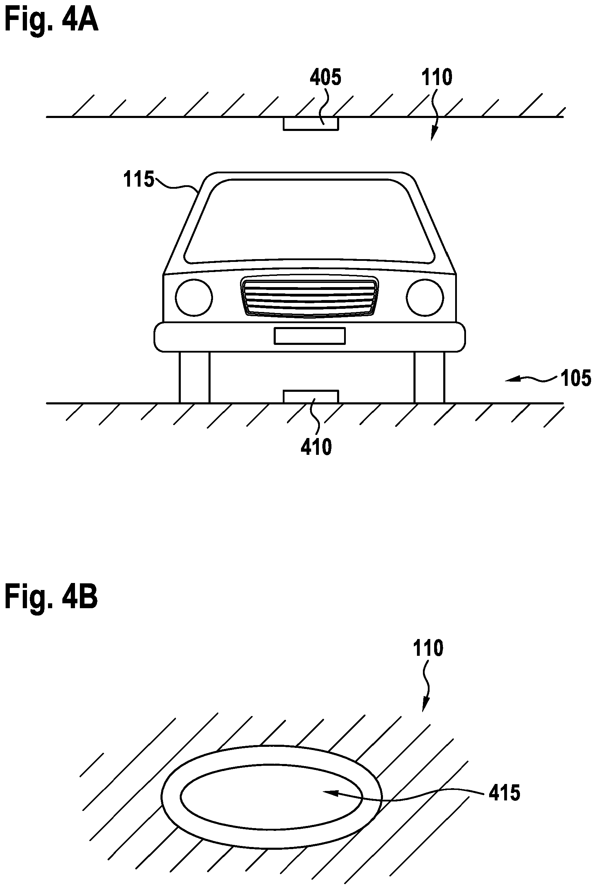

Figur 4 zeigt unterschiedliche Ausführungsformen von Fahrzeugsensoren 120. In Figur 4A sind ein deckengestützter Fahrzeugsensor 405 und ein bodengestützter Fahrzeugsensor 410 dargestellt. Der deckengestützte Fahrzeugsensor 405 ist bevorzugterweise über dem Raum angebracht, der zum Abstellen des Kraftfahrzeugs 115 auf der Abstellfläche 110 zur Verfügung steht. Dementsprechend ist der bodengestützte Fahrzeugsensor 410 auf dem Boden der Abstellfläche 110 angeordnet.

Figur 4B zeigt einen in die Abstellfläche 110 eingelassenen Fahrzeugsensor 415. Dabei schließt die Oberkante des Fahrzeugsensors 415 bevorzugterweise mit der Abstellfläche 110 möglichst bündig ab. In einer weiteren Ausführungsform kann der Fahrzeugsensor 415 auch in ein Bodenmaterial der Abstellfläche 110 eingelassen sein, sodass er an seiner Oberseite durch Bodenmaterial abgedeckt ist.

Die Fahrzeugsensoren 410 und 415 können insbesondere in einen Bodenbelag, beispielsweise Beton, Estrich oder Asphalt, der Abstellfläche 110 eingelassen bzw. an oder auf ihr montiert sein. Eine Zuleitung zur Kommunikation oder zur Energieversorgung des Fahrzeugsensors 410, 415 kann in das Bodenmaterial eingearbeitet oder unter dem Bodenmaterial verlegt sein. In einer weiteren Ausführungsform verfügt einer der Fahrzeugsensoren 410, 415 über eine autarke Stromversorgung, beispielsweise mittels einer Batterie. Die Batterie kann für eine Betriebsdauer im Fahrzeugsensor 410, 415 von mehreren Jahren ausgelegt sein.

Die oben beschriebene Technik erlaubt es, Fahrzeugsensoren 120 beim Erstellen bzw. Ausstatten des Parkplatzes 105 ohne erhöhte Genauigkeit anzubringen und erst später zu vermessen. Beispielsweise kann während des Legens eines Estrichs oder während des Asphaltierens der Abstellfläche 110 ein bodengestützter Fahrzeugsensor 410 oder ein eingelassener Fahrzeugsensor 415 in dem noch weichen Bodenmaterial mit verarbeitet werden. In einer Ausführungsform können die Fahrzeugsensoren 410, 415 auch zusammen mit dem Bodenbelag verarbeitet werden, beispielsweise indem sie in den zu legenden Bodenbelag eingestreut und dann nach Art der Darstellung von Figur 3 zufällig auf der Fläche des Parkplatzes 105 verteilt werden.

## Patentansprüche

1. System (140) zur Konfiguration eines Verwaltungssystems (100) für einen Parkplatz (105), wobei das System (140) folgendes umfasst:
- eine fahrbare Plattform (145) zum Abfahren des Parkplatzes (105);
- eine Navigationseinrichtung (155) zur Bestimmung einer Position der Plattform (145) auf dem Parkplatz (105);
- einen Fahrzeugsensor (120) des Verwaltungssystems (100), wobei der Fahrzeugsensor (120) dazu eingerichtet ist, eine Annäherung eines Kraftfahrzeugs (115) zu erfassen;
- wobei die Plattform (145) dazu eingerichtet ist, durch den Fahrzeugsensor (120) als Kraftfahrzeug (115) erfasst zu werden; und
- eine Steuereinrichtung (150), die dazu eingerichtet ist, die Plattform (145) anzusteuern, den Parkplatz (105) abzufahren und die Position des die Annäherung erfassenden Fahrzeugsensors (120) einer Position der Plattform (145) zuzuordnen.

2. System (140) nach Anspruch 1, wobei die Navigationseinrichtung einen Empfänger (155) für Signale von Navigationssatelliten umfasst.

3. System (140) nach Anspruch 1 oder 2, wobei die Navigationseinrichtung ein Trägheitsnavigationssystem (155) umfasst.

4. System (140) nach einem der vorangehenden Ansprüche, wobei die Navigationseinrichtung einen Empfänger (170) für Signale von drahtlosen Sendern (130) umfasst, die im Bereich des Parkplatzes (105) angebracht sind, und die Steuereinrichtung (150) dazu eingerichtet ist, die Position der Plattform (145) auf der Basis von Positionen der drahtlosen Sender (130) mittels Triangulation zu bestimmen.

5. System (140) nach einem der vorangehenden Ansprüche, wobei mehrere Fahrzeugsensoren (120) in zufälligen Positionen auf dem Parkplatz (105) angeordnet sind und eine mittlere Dichte von Fahrzeugsensoren (120) pro Fläche eingehalten ist.

6. Verfahren zur Konfiguration eines Verwaltungssystems (100) für einen Parkplatz (105), folgende Schritte umfassend:
- Anbringen eines Fahrzeugsensors (120) des Verwaltungssystems (100) auf einem Parkplatz (105) für ein Kraftfahrzeug (115),
- wobei der Fahrzeugsensor (120) dazu eingerichtet ist, ein Kraftfahrzeug (115) zu erfassen;
- Abfahren des Parkplatzes (105) mit einer fahrbaren Plattform (145);
- wobei die Plattform (145) dazu eingerichtet ist, durch den Fahrzeugsensor (120) als Kraftfahrzeug (115) erfasst zu werden;
- Erfassen einer Annäherung der Plattform (145) an den Fahrzeugsensor (120), wobei die Annäherung seitens des Fahrzeugsensors (120) bestimmmt wird;
- Bestimmen einer Position der Plattform (145); und
- Zuordnen der Position der Plattform (145) zu einer Position des Fahrzeugsensors (120).

7. Computerprogrammprodukt mit Programmcodemitteln zur Durchführung des Verfahrens nach Anspruch 6, wenn das Computerprogrammprodukt auf einer Verarbeitungseinrichtung (150) abläuft oder auf einem computerlesbaren Datenträger gespeichert ist.

## Claims

1. System (140) for configuring a management system (100) for a parking area (105), wherein the system (140) comprises the following:
- a movable platform (145) for scanning the parking area (105);
- a navigation device (155) for determining a position of the platform (145) in the parking area (105);
- a vehicle sensor (120) of the management system (100), wherein the vehicle sensor (120) is configured to detect when a motor vehicle (115) approaches;
- wherein the platform (145) is configured to be detected by the vehicle sensor (120) as a motor vehicle (115); and
- a control device (150) which is configured to control the platform (145) to scan the parking area (105) and to assign the position of the vehicle sensor (120) detecting the approach to a position of the platform (145).

2. System (140) according to Claim 1, wherein the navigation device comprises a receiver (155) for signals from navigation satellites.

3. System (140) according to Claim 1 or 2, wherein the navigation device comprises an inertial navigation system (155).

4. System (140) according to one of the preceding claims, wherein the navigation device comprises a receiver (170) for signals from wireless transmitters (130) which are fitted in the region of the parking area (105), and the control device (150) is configured to determine the position of the platform (145) on the basis of positions of the wireless transmitters (130) by means of triangulation.

5. System (140) according to one of the preceding claims, wherein a plurality of vehicle sensors (120) are arranged at random positions in the parking area (105), and an average density of vehicle sensors (120) per area is complied with.

6. Method for configuring a management system (100) for a parking area (105), comprising the following steps of:
- fitting a vehicle sensor (120) of the management system (100) in a parking area (105) for a motor vehicle (115),
- wherein the vehicle sensor (120) is configured to detect a motor vehicle (115);
- scanning the parking area (105) using a movable platform (145);
- wherein the platform (145) is configured to be detected by the vehicle sensor (120) as a motor vehicle (115);
- detecting when the platform (145) approaches the vehicle sensor (120), wherein the approach is determined by the vehicle sensor (120);
- determining a position of the platform (145); and
- assigning the position of the platform (145) to a position of the vehicle sensor (120).

7. Computer program product having program code means for carrying out the method according to Claim 6 when the computer program product runs on a processing device (150) or is stored on a computer readable data storage medium.

## Revendications

1. Système (140) permettant de configurer un système de gestion (100) pour un parc de stationnement (105), le système (140) comprenant ce qui suit :
- une plateforme roulante (145) servant à parcourir le parc de stationnement (105) ;
- un dispositif de navigation (155) servant à déterminer une position de la plateforme (145) sur le parc de stationnement (105) ;
- un capteur de véhicule (120) du système de gestion (100), le capteur de véhicule (120) étant conçu pour détecter un véhicule automobile (115) qui s'approche ;
- la plateforme (145) étant conçue pour être détectée comme un véhicule automobile (115) par le capteur de véhicule (120) ; et
- un dispositif de commande (150) qui est conçu pour piloter la plateforme (145) pour qu'elle parcoure le parc de stationnement (105) et associe la position du capteur de véhicule (120) détectant l'approche à une position de la plateforme (145).

2. Système (140) selon la revendication 1, dans lequel le dispositif de navigation comprend un récepteur (155) pour des signaux provenant de satellites de navigation.

3. Système (140) selon la revendication 1 ou 2, dans lequel le dispositif de navigation comprend un système de navigation inertielle (155).

4. Système (140) selon l'une quelconque des revendications précédentes, dans lequel le dispositif de navigation comprend un récepteur (170) pour des signaux provenant d'émetteurs sans fil (130) qui sont installés dans la zone du parc de stationnement (105), et le dispositif de commande (150) est conçu pour déterminer par triangulation la position de la plateforme (145) sur la base de positions des émetteurs sans fil (130).

5. Système (140) selon l'une quelconque des revendications précédentes, dans lequel plusieurs capteurs de véhicule (120) sont disposés dans des positions aléatoires sur le parc de stationnement (105), et une densité moyenne de capteurs de véhicule (120) par surface est respectée.

6. Procédé permettant de configurer un système de gestion (100) pour un parc de stationnement (105), comprenant les étapes suivantes consistant à :
- installer un capteur de véhicule (120) du système de gestion (100) sur un parc de stationnement (105) pour un véhicule automobile (115),
- le capteur de véhicule (120) étant conçu pour détecter un véhicule automobile (115) ;
- parcourir le parc de stationnement (105) à l'aide d'une plateforme roulante (145) ;
- la plateforme (145) étant conçue pour être détectée comme un véhicule automobile (115) par le capteur de véhicule (120) ;
- détecter que la plateforme (145) s'approche du capteur de véhicule (120), l'approche étant déterminée du côté du capteur de véhicule (120) ;
- déterminer une position de la plateforme (145) ; et
- associer la position de la plateforme (145) à une position du capteur de véhicule (120).

7. Produit de programme informatique comprenant des moyens de code programme permettant d'exécuter le procédé selon la revendication 6 lorsque le produit de programme informatique est exécuté sur un dispositif de traitement (150) ou est stocké sur un support de données lisible par ordinateur.
